# EUROPÄISCHE PATENTSCHRIFT

(11) **EP 1 313 284 B1**
(45) Veröffentlichungstag und Bekanntmachung des Hinweises auf die Patenterteilung: **10.08.2005**
(21) Anmeldenummer: 01440285.3
(22) Anmeldetag: 29.08.2001
(51) Int. Cl.: H04L 29/06, H04L 12/56

(54) **Router**
Router
Routeur

(43) Veröffentlichungstag der Anmeldung: 21.05.2003
(73) Patentinhaber: ALCATEL, 75008 Paris (FR)
(72) Erfinder: Klotsche, Ralf, 75305 Neuenbürg (DE)
(74) Vertreter: Menzietti, Domenico, Dipl.-Ing

(56) Entgegenhaltungen:
- WO-A-00/30307
- WO-A-01/31882
- US-A- 5 761 440
- US-B1- 6 226 267

## Beschreibung

Die Erfindung betrifft einen Router.

Router werden in Telekommunikationsnetzen z.B. als Schnittstelle eingesetzt zwischen einem Internet Protokoll basierten Backbone Netzwerk und einem Zugangsnetz, z.B. einem DSL-Netzwerk; DSL = Digital Subscriber Line. DSL-Netzwerke sind z.B. als ADSL, SDSL, VHDSL ausgeführt, wobei A für Asymmetric, S für Symmetric und VH für Very High steht.

Ein Router beinhaltet üblicherweise einen Paketspeicher und eine Ausleseeinheit und dient dem Routen von empfangenen Informationspaketen. Im Paketspeicher werden die empfangenen Informationspakete zwischengespeichert. Router, die keine Dienste-Qualitäten unterscheiden, arbeiten nach den FIFO (first in first out) Prinzip, d.h. jedes Paket wird sofort nach dem Empfang weitergeleitet. Router, die unterschiedliche Dienste-Qualitäten unterscheiden und jeden einzelnen Datenfluss getrennt behandeln müssen, werten Teile jedes Paketes aus und vergleichen es mit einer Liste von Klassifizierern, die die Zuordnung des Paktes zu einem Datenstrom ermöglichen. Nach der Zuordnung werden in einem Zwischenspeicher lediglich Zeiger auf die Informationspakete zwischengespeichert. Der Klassifizierer ist vorgesehen, um die Zeiger der Informationspakete aus dem empfangenen Paketstrom zu extrahieren, zu evaluieren und dem mindestens einen Zwischenspeicher zuzuführen. Die Ausleseeinheit dient dazu, die zwischengespeicherten Zeiger auszulesen und anhand der ausgelesenen Zeiger die den ausgelesenen Zeigern zugeordneten Informationspakete zu detektieren und auszulesen. Für die Ausleseprozedur wird ein sogenannter Weighted-Round Robin (WRR) Mechanismus verwendet. Dabei werden unterschiedliche Zwischenspeicherbereiche nacheinander und in vorgegebenen Zeitfenstern ausgelesen. Dieses Verfahren sorgt dafür, das an den Ausgängen der Routers jeder Datenfluss und jede Dienste-Klasse die für sie vorgesehene Bandbreite erhält. Die Reihenfolge der Pakete zwischen den verschiedenen Datenflüssen kann sich durchaus ändern, innerhalb eines Datenflusses ändert sich die Reihenfolge Packte jedoch nicht.

Informationspakete werden üblicherweise in unterschiedlichen, sogenannten Quality of Service (QoS) Klassen übertragen. Eine Quality of Service Klasse spezifiziert beispielsweise Sprache über Internet, dem sogenannten Voice over Internet Protocol (VolP). Eine andere Quality of Service Klasse spezifiziert beispielsweise den sogenannten Best Effort (BE) Service. In Informationspaketen können als Information Sprache, Daten, Video, Internet Web-Seiten, etc. übertragen werden.

Die Router, die eine dienstespezifische Vergebührung unterstützen, müssen jedes Informationspaket individuell klassifizieren und routen unter Berücksichtigung von unterschiedlichen Anforderungen.

Die gesamte Bandbreite eines Übertragungskanals wird unter den angebotenen Dienstetypen aufgeteilt, vergleichbar der Aufteilung eines Kreises in Sektoren. "Weighted" bedeutet, dass die Sektoren ungleich groß sein können, um dem gegebenen Verkehrsprofil gerecht zu werden. Der Trick für QoS besteht darin, dass die Sektoren für VoIP immer etwas größer sind als der Bedarf, und dass sie hinreichen schnell aufeinander folgen. Für Best Effort Verkehr gibt es keine Qulitätsgarantie und die bereitgestellte Bandbreite kann kleiner sein als die angeforderte. Die Sektoren im WRR dürfen im Vergleich zum aufkommenden Verkehr zu klein sein. Daher können Best Effort Pakete am WRR kollidieren, verzögert oder ganz fallen gelassen werden.

Die Suche nach Zeigern erfordert Zeit, wodurch die Verarbeitungsgeschwindigkeit des Routers beeinträchtigt wird. Zudem kann eine längere Suche dazu führen, dass im Ausgangsinformationspaketstrom Lücken auftreten, in denen keine Informationspakete übertragen werden, was zu einer geringeren Informationsrate führt. Ferner ist für das Auslesen eines Zwischenbereichs ein vorgegebener Zeitschlitz reserviert, so dass durch eine längere Suche die Abarbeitung des Zwischenspeicherbereichs beeinträchtigt wird, wodurch es zu einem Überlauf des Zwischenspeicherbereichs kommen kann, der zu Informationsverlust führt.

In WO 00/30307 ist ein Apparat zur Bereitstellung unterschiedlicher Dienste offenbart. Der Apparat beinhaltet drei verschiedene Zwischenspeicher, wobei zwei eine Schnittstelle zu einem Netzwerk aufweisen und der dritte nicht. Abhängig von der Priorisierung eines Dienstes, erfolgt die Zwischenspeicherung eines, einem Dienst zugeordneten, empfangenen Datenpakets in einem zugeordneten Zwischenspeicherbereich.

In US 6,226,267 B1 ist ein System zum Schalten von Verbindungen für zwischen Knoten eines Datenverarbeitungssystems zu übertragenden Datenpaketen offenbart, wobei die Datenpakete mittels unterschiedlicher Übertragungsprotokolle übertragen werden können. Das Schalten erfolgt abhängig von den unterschiedlichen Übertragungsprotokollen. Die nötige Zwischenspeicherung der Datenpakete ist beispielsweise prioritätsabhängig oder abhängig von einer tabellarischen Einteilung der Datenpakete.

Aufgabe der Erfindung ist es, einen Router zu schaffen, der eine erhöhte Verarbeitungsgeschwindigkeit aufweist.

Gelöst wird diese Aufgabe durch einen Router nach Anspruch 1.

Erfindungsgemäß werden beim Zugriff durch einen Klassifizierer die im Zwischenspeicher gespeicherten Zeiger für Informationspakete bei Bedarf geordnet. Droht beispielsweise ein Überlauf in einem Zwischenspeicherbereich, so werden einzelne Zeiger ausgewählt und aus dem Zwischenspeicherbereich entfernt. Die ausgewählten Zeiger werden z.B. in einen zusätzlichen Zwischenspeicherbereich verschoben. Dieser zusätzliche Zwischenspeicherbereich wird dann bevorzugt ausgelesen, so dass die ausgewählten Zeiger vor den Zeigern im Zwischenspeicherbereich ausgelesen werden. Kriterium für die Auswahl eines Zeigers ist z.B. eine abgelaufene Reaktivierungszeit oder ein über einen Schwellwert gefüllter Zwischenspeicherbereich. Der erfindungsgemäße Router berücksichtigt einzelne Datenflüsse und/oder Dienste-Klassen.

Vorteilhafte Ausgestaltungen sind den abhängigen Ansprüchen und der nachfolgenden Beschreibung zu entnehmen.

Im folgenden wird die Erfindung anhand eines Ausführungsbeispiels und unter Zuhilfenahme von zwei Figuren erläutert. Es zeigen:
- Fig. 1: eine schematische Darstellung eines erfindungsgemäßen Routers,
- Fig. 2: Ausschnitt aus dem Router aus Fig. 1.

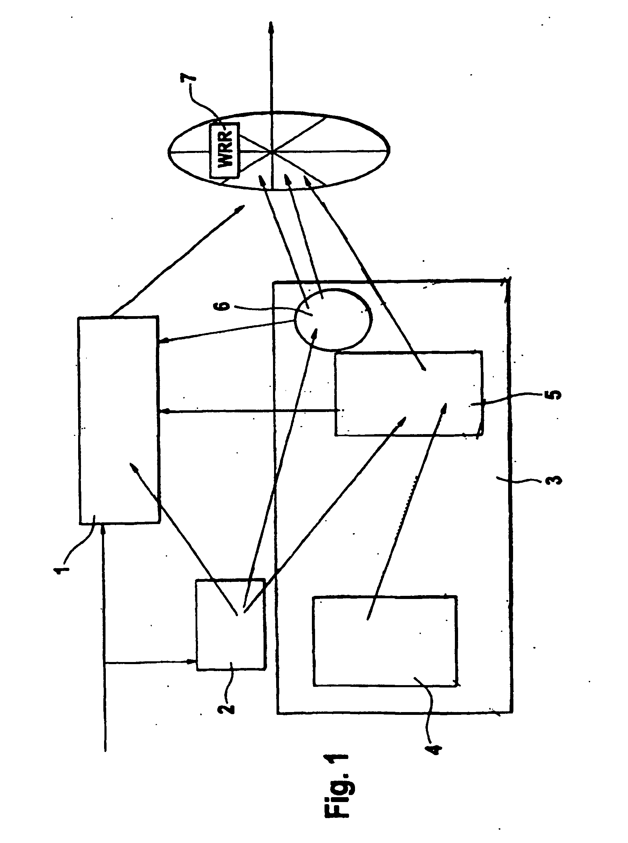

Der Router aus Fig.1 beinhaltet einen Klassifizierer 2, einen Zwischenspeicher 3, einen Paketspeicher 1 und eine Ausleseeinheit 7 und dient dem Routen von empfangenen Informationspaketen.

Im Paketspeicher 1 werden die empfangenen Informationspakete zwischengespeichert. Die Informationspakete sind beispielsweise Internet Protocol Pakete. In ihnen können z.B. Sprache, Daten oder Video übertragen werden.

Im Zwischenspeicher 3 werden die beim Empfang der Informationspakete zugewiesenen Zeiger für die Informationspakete zwischengespeichert. Der Zwischenspeicher kann z.B. aus einem Speicher mit mehreren Speicherbereichen oder mehreren Speichern mit jeweils einem oder mehreren Speicherbereichen bestehen.

Der Klassifizierer 2 ist vorgesehen, um die Informationspakete aus dem empfangenen Paketstrom zu bewerten und einzelnen Datenflüssen zuzuordnen, zu evaluieren und die entsprechenden Zeiger dem Zwischenspeicherbereich 5 oder 6 je nach Bedarf des Datenflusses zuzuführen.

Die Ausleseeinheit 7 dient dazu, die zwischengespeicherten Zeiger auszulesen und anhand der ausgelesenen Zeiger die den ausgelesenen Zeigern zugeordneten Informationspakete zu detektieren und auszulesen. Für die Ausleseprozedur wird ein sogenannter Weighted-Round Robin (WRR) Mechanismus verwendet. Dabei werden unterschiedliche Zwischenspeicherbereiche nacheinander und in vorgegebenen Zeitfenstern ausgelesen. Ein übliches Weighted Fair Queueing (WFQ) teilt jedem Datentyp eine gewisse Bandbreite zu. Die Erfindung behandelt zusätzlich einzelne Datenströme. Mittels der Erfindung wird damit ein erweitertes Weighted Fair Queueing realisiert.

Zwischenspeicher 3 beinhaltet einen Zwischenspeicherbereich 4 für einen Suchbaum, einen Zwischenspeicherbereich 5 für die Speicherung von Zeigern für Informationspakete und einen weiteren Zwischenspeicherbereich 6 zur Speicherung von ausgewählten Zeigern für Informationspakete.

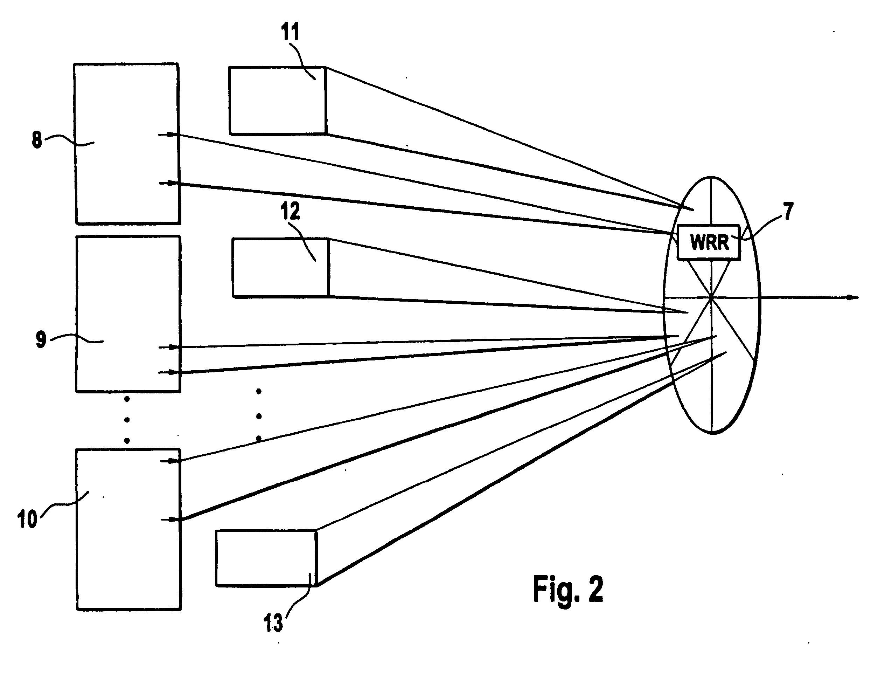

Zwischenspeicherbereich 5 beinhaltet Zwischenspeicherbereiche 8, 9, 10, die in Fig. 2 dargestellt sind und zur Speicherung von Zeigen für Informationspakete unterschiedlicher Quality of Service Klassen dienen.

Der weitere Zwischenspeicherbereich 6 beinhaltet Zwischenspeicherbereiche 11, 12, 13, die in Fig. 2 dargestellt sind und zur Speicherung von ausgewählten Zeigen für Informationspakete unterschiedlicher Quality of Service Klassen dienen. Zwischenspeicherbereich 11 ist Zwischenspeicherbereich 8 zugeordnet, Zwischenspeicherbereich 12 Zwischenspeicherbereich 9, Zwischenspeicherbereich 13 Zwischenspeicherbereich 10.

Die Zwischenspeicherbereiche 4, 5, 6, 8, 9, 10, 11, 12, 13 des Zwischenspeichers können mittels Software kontrolliert und dimensioniert werden.

Klassifizierer 2 schreibt die detektierten und nach Quality of Service Klassen geordneten Zeiger in die entsprechenden Zwischenspeicherbereiche 8, 9, 10. Jeder Zeiger wird beispielsweise zusammen mit einer Reaktivierungszeit abgespeichert.

Wenn sich ein Zwischenspeicherbereich 8, 9, 10 über einen bestimmten Schwellwert füllt oder wenn die Reaktivierungszeit eines in einem Zwischenspeicherbereich 8, 9, 10 gespeicherten Zeigers abgelaufen ist, werden ein oder mehr Zeiger in den zugeordneten weiteren Zwischenspeicherbereich 11, 12, 13 verschoben, z.B. Zeiger aus Zwischenbereich 8 in weiteren Zwischenspeicherbereich 11.

Die Ausleseeinheit 7 hat direkten Zugriff zu den Zwischenspeicherbereichen 8, 9, 10 und den weiteren Zwischenspeicherbereichen 11, 12, 13. Letztere werden zuerst bedient. Die weiteren Zwischenspeicherbereiche 11, 12, 13 haben jeweils eine kleinere Speicherplatzkapazität als die zugeordneten Zwischenspeicherbereiche 8, 9, 10.

Zwischenspeicherbereich 8 und weiterer Zwischenspeicherbereich 11 bilden eine Gruppe. Eine weitere Gruppe bilden Zwischenspeicherbereich 9 und weiterer Zwischenspeicherbereich 12. Eine weitere Gruppe bilden Zwischenspeicherbereich 10 und weiterer Zwischenspeicherbereich 13.
Die Ausleseeinheit 7 greift auf eine Gruppe für eine vorbestimmte Zeitspanne zu. Zunächst wird der weitere Zwischenspeicherbereich, z.B. 11 ausgelesen. Die vorbestimmte Zeitspanne ist so bestimmt, dass alle im weiteren Zwischenspeicherbereich 11 gespeicherten Zeiger ausgelesen und die zugehörigen Datenpakete weiter versendet werden werden können. Die weiteren Zwischenspeicherbereiche 11, 12, 13 können jeweils als Ringspeicher ausgeführt sein und ermöglichen eine Staffelung von Bearbeitungsprioritäten. In der verbleibenden Zeitspanne greift die Ausleseeinheit 7 auf Zwischenspeicherbereich 8 zu, um weitere Datenflüsse zu bedienen, die keine erhöhte Priorität besitzen. Bei hoher Last wird selbst bei VoIP nur ein Teil der Zwischenspeicherbereiche 8, 9, 10 abgearbeitet. Immer aber werden in den zugehörigen Zeitschlitzen die Zwischenspeicherbereiche 12, 13 vollständig abgearbeitet, um einzelne Pakete, die bereits eine hohe Latenzzeit haben, abzuarbeiten.

Die Ausleseeinheit 7 ermittelt anhand jedes einzelnen Zeigers wieder das zugehörige Paket und veranlasst dessen Übertragung.

Die Zeitspanne zum Zugreifen auf eine Gruppe kann gleich oder unterschiedlich sein zu der Zeitspanne zum Zugreifen auf eine andere Gruppe.

Anstelle einer Ausleseeinheit 7 können zwei oder mehr Ausleseeinheiten verwendet werden, die Zugriff auf unterschiedliche Gruppen haben können. Ausleseeinheit 7 kann in Hard- und/oder Software ausgeführt sein. Klassifizierer 2 kann in Hard- und/oder Software ausgeführt sein.

Der Router kann Teil eines sogenannten interaktiven Netzwerkadapters sein und kann z.B. verwendet werden im Zusammenhang mit der Umsetzung von z.B. IP- oder ATM-Protokolle in z.B. DOCSIS-, DVB-, HFC-, MAC- oder HFR-Protokolle.

In Zwischenspeicherbereich 4 ist eine Suchliste in Form einer Baumstruktur gespeichert. Sie dient dazu, eine Übereinstimmung zwischen Datenelementen des Paketes im Paketspeicher 1 und Klassifizierer 2 durchzuführen.
Ein im Klassifizierer 2 angeordneter Komparator vergleicht die Klassifizierungselemente eines Kopfes eines empfangenen Informationspakets, also z.B. einen IP-Header, mit den Einträgen in der Baumliste. Jeder Vergleich offenbart, ob das Klassifizierungselement kleiner, größer oder gleich dem Element der Baumliste ist. Die Suchliste ist in Form eines Baumes strukturiert mit drei Verzweigungen an jedem Knoten. Das Ergebnis eines jeden Vergleichs wird für eine Adressoperation benutzt. Wenn die entsprechende Adresse des Zwischenspeicherbereichs gefunden ist, wird der entsprechende Zeiger an die aufgefundene Adresse im Zwischenspeicher gespeichert. Optional ist im Zwischenspeicherbereich 4 eine zweite Suchliste mit einer zweiten Baumstruktur gespeichert. Zur gleichen Zeit wird nur eine der beiden Baumstrukturen vom Komparator verwendet. Die nicht verwendete Baumstruktur kann in der Zwischenzeit adaptiert, reorganisiert, restrukturiert, etc. werden. Auf diese Weise wird vom Komparator stets eine aktuelle und optimierte Baumstruktur verwendet.

Anstelle einer Suchliste kann im Zwischenspeicherbereich 4 auch eine andere Struktur verwendet werden. An Stelle eines direkten Vergleiches von Datenfeldern kann auch eine sogenannte "Hashing"- Funktion eingesetzt werden, um den Vergleichsvorgang zu optimieren. Auch die Verwendung eines Komparators ist optional.

## Patentansprüche

1. Router beinhaltend mindestens einen Zwischenspeicher (3) zur Zwischenspeicherung von Zeigern für Informationspakete in mindestens zwei unterschiedlichen Zwischenspeicherbereichen (5, 8, 9, 10), wobei mindestens ein weiterer Zwischenspeicherbereich (6, 11, 12, 13) vorgesehen ist, um ausgewählte Zeiger zu speichern, wobei eine Ausleseeinheit (7) zum Auslesen des mindestens einen Zwischenspeichers (3) vorgesehen ist, und die Ausleseeinheit (7) geeignet ist, unterschiedliche Zwischenspeicherbereiche (5, 8, 9, 10) nacheinander in vorgegebenen Zeitfenstern auszulesen und vor dem Auslesen eines Zwischenspeicherbereichs (5, 8, 9, 10) einen dem auszulesenden Zwischenspeicherbereich (5, 8, 9, 10) zugeordneten weiteren Zwischenspeicherbereich (6, 11, 12, 13) auszulesen und in diesem weiteren Zwischenspeicherbereich (6, 11, 12, 13) jeden zwischengespeicherten Zeiger auszulesen, wobei beim Auslesen des mindestens einen Zwischenspeichers (3) der mindestens eine weitere Zwischenspeicherbereich (6, 11, 12, 13) als Auslesebereich gegenüber den mindestens zwei unterschiedlichen Zwischenspeicherbereichen (5, 8, 9, 10) bevorzugt wird, **dass** jeder Zwischenspeicherbereich (5, 8, 9, 10) und jeder weitere Zwischenspeicherbereich (6, 11, 12, 13) zur Zwischenspeicherung von Zeigern für Informationspakete dient, die einer speziellen Quality of Service Klasse angehören, und dass jedem Zwischenspeicherbereich (5, 8, 9, 10) ein weiterer Zwischenspeicherbereich (6, 11, 12, 13) zugeordnet ist, **gekennzeichnet durch** Mittel, die einen zeiger in einen weiteren Zwischenspeicherbereich (6, 11, 12, 13) verschieben, wenn die Reaktivierungszeit des Zeigers abgelaufen ist oder ein Überlauf des Zwischenspeicherbereichs droht.

2. Router nach Anspruch 1, **dadurch gekennzeichnet, dass** die ausgewählten Zeiger Zeiger sind, deren Reaktivierungszeit abgelaufen oder deren Verbleib oder Eintrag in einem Zwischenspeicherbereich (5, 8, 9, 10) zu einem Füllen des Zwischenspeicherbereichs (5, 8, 9, 10) über einen Schwellwert führen würde.

3. Router nach Anspruch 1, **dadurch gekennzeichnet, dass** die Ausleseeinheit (7) derart angepaßt ist, dass sie mit dem Weighted Round-Robin Mechanismus arbeitet.

4. Router nach Anspruch 1, **dadurch gekennzeichnet, dass** ein Klassifizierer (2) vorgesehen ist, um die Zeiger der Informationspakete aus dem empfangenen Paketstrom zu extrahieren, zu evaluieren und dem mindestens einen Zwischenspeicher (3) zuzuführen.

5. Router nach Anspruch 1, **dadurch gekennzeichnet, dass** jeder weitere Zwischenspeicherbereich (6, 11, 12, 13) als Ringspeicher ausgeführt ist.

6. Router nach Anspruch 1, **dadurch gekennzeichnet, dass** ein weiterer Zwischenspeicherbereich (6, 11, 12, 13) eine geringere Speicherkapazität hat als ein Zwischenspeicherbereich (5, 8, 9, 10), wobei die geringere Speicherkapazität derart dimensioniert ist, dass sie innerhalb eines, dem weiteren Zwischenspeicherbereich (6, 11, 12, 13) zugewiesenen Zeitschlitzes abgearbeitet werden kann.

## Claims

1. Router containing at least one buffer memory (3) for temporary storage of pointers for information packets in at least two different buffer memory areas (5, 8, 9, 10), at least one further buffer memory area (6, 11, 12, 13) being provided, for storing selected pointers, a readout unit (7) being provided for reading the at least one buffer memory (3), and the readout unit (7) being suitable for reading different buffer memory areas (5, 8, 9, 10) successively in predefined time windows and, before reading a buffer memory area (5, 8, 9, 10), reading a further buffer memory area (6, 11, 12, 13) assigned to the buffer memory area (5, 8, 9, 10) to be read, and in this further buffer memory area (6, 11, 12, 13) reading each temporarily stored pointer, the at least one further buffer memory area (6, 11, 12, 13) being given precedence over the at least two different buffer memory areas (5, 8, 9, 10) as read-out area in the reading out of the at least one buffer memory (3), each buffer memory area (5, 8, 9, 10) and each further buffer memory area (6, 11, 12, 13) being used for temporary storage of pointers for information packets, which belong to a specific quality of service class, and each buffer memory area (5, 8, 9, 10) being assigned a further buffer memory area (6, 11, 12, 13), **characterized by** means that move a pointer into a further buffer memory area (6, 11, 12, 13), if the reactivation time of the pointer is expired or the buffer memory area is in danger of overflowing.

2. Router according to Claim 1, **characterized in that** the selected pointers are pointers whose reactivation time is expired, or whose continued presence or entry in a buffer memory area (5, 8, 9, 10) would lead to filling of the buffer memory area (5, 8, 9, 10) above a threshold value.

3. Router according to Claim 1, **characterized in that** the readout unit (7) is adapted in such a way that it works with the weighted round robin mechanism.

4. Router according to Claim 1, **characterized in that** a classifier (2) is provided, to extract the pointers to the information packets from the received packet stream, evaluate these pointers and forward them to the at least one buffer memory (3).

5. Router according to Claim 1, **characterized in that** each further buffer memory area (6, 11, 12, 13) is executed as a circular buffer.

6. Router according to Claim 1, **characterized in that** a further buffer memory area (6, 11, 12, 13) has a lower storage capacity than a buffer memory area (5, 8, 9, 10), the lower storage capacity being dimensioned such that it can be processed within a time slot allocated to the further buffer memory area (6, 11, 12, 13).

## Revendications

1. Routeur comprenant au moins une mémoire temporaire (3) pour l'enregistrement temporaire de pointeurs pour des paquets d'informations dans au moins deux zones de mémoire temporaire différentes (5, 8, 9, 10), au moins une zone de mémoire temporaire supplémentaire (6, 11, 12, 13) étant prévue pour enregistrer les pointeurs sélectionnés, une unité de lecture (7) destinée à lire au moins une mémoire intermédiaire (3) étant prévue et l'unité de lecture (7) étant conçue pour lire différentes zones de mémoire temporaire (5, 8, 9, 10) les unes après les autres dans des créneaux temporels prédéfinis et, avant la lecture d'une zone de mémoire temporaire (5, 8, 9, 10), pour lire une zone de mémoire temporaire supplémentaire (6, 11, 12, 13) associée à la zone de mémoire temporaire (5, 8, 9, 10) lue et pour lire chaque pointeur enregistré temporairement dans cette zone de mémoire temporaire supplémentaire (6, 11, 12, 13), l'au moins une zone de mémoire temporaire supplémentaire (6, 11, 12, 13) étant une zone de lecture préférée lors de la lecture de l'au moins une mémoire temporaire (3) par rapport aux au moins deux zones de mémoire temporaire (5, 8, 9, 10) différentes, que chaque zone de mémoire temporaire (5, 8, 9, 10) et chaque zone de mémoire temporaire supplémentaire (6, 11, 12, 13) sert à l'enregistrement temporaire de pointeurs pour des paquets d'informations qui font partie d'une classe de qualité de service spécifique et qu'une zone de mémoire temporaire supplémentaire (6, 11, 12, 13) est associée à chaque zone de mémoire temporaire (5, 8, 9, 10), **caractérisé par** des moyens qui déplacent un pointeur dans une zone de mémoire temporaire supplémentaire (6, 11, 12, 13) lorsque le temps de réactivation du pointeur est écoulé ou lorsqu'il se produit un débordement de la zone de mémoire temporaire.

2. Routeur selon la revendication 1, **caractérisé en ce que** les pointeurs sélectionnés sont des routeurs dont le temps de réactivation est écoulé ou dont le maintien ou l'enregistrement dans une zone de mémoire temporaire (5, 8, 9, 10) donnerait lieu à un remplissage de la zone de mémoire temporaire (5, 8, 9, 10) au-delà d'une valeur de seuil.

3. Routeur selon la revendication 1, **caractérisé en ce que** l'unité de lecture (7) est adaptée de telle sorte qu'elle fonctionne avec le mécanisme de la répartition de charge pondérée.

4. Routeur selon la revendication 1, **caractérisé en ce qu'**il est prévu un classificateur (2) pour extraire les pointeurs des paquets d'informations du flux de paquets reçu, les évaluer et les acheminer à l'au moins une mémoire temporaire (3).

5. Routeur selon la revendication 1, **caractérisé en ce que** chaque zone de mémoire temporaire supplémentaire (6, 11, 12, 13) est réalisée sous la forme d'une mémoire en anneau.

6. Routeur selon la revendication 1, **caractérisé en ce qu'**une zone de mémoire temporaire supplémentaire (6, 11, 12, 13) possède une capacité de mémoire inférieure à une zone de mémoire temporaire (5, 8, 9, 10), la capacité de mémoire plus faible étant dimensionnée de telle sorte qu'elle peut être traitée pendant l'intervalle de temps affecté à la zone de mémoire temporaire supplémentaire (6, 11, 12, 13).
